(19) Europäisches Patentamt
European Patent Office
Office européen des brevets

(11) EP 4 593 327 A1

(12) EUROPEAN PATENT APPLICATION

(43) Date of publication:
30.07.2025 Bulletin 2025/31

(51) International Patent Classification (IPC):
$H04L\ 9/32^{(2006.01)}$ $\quad$ $H04L\ 9/00^{(2022.01)}$

(21) Application number: 24153516.0

(22) Date of filing: 23.01.2024

(52) Cooperative Patent Classification (CPC):
H04L 9/3252; H04L 9/002

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Nagravision Sàrl
1033 Cheseaux-sur-Lausanne (CH)

(72) Inventors:
• MACCHETTI, Marco
1033 Cheseaux-sur-Lausanne (CH)
• VILLEGAS, Karine
1033 Cheseaux-sur-Lausanne (CH)

(74) Representative: Mewburn Ellis LLP
Aurora Building
Counterslip
Bristol BS1 6BX (GB)

(54) DIGITAL SIGNATURE GENERATION

(57) A computer-implemented method, executed by a host device, of generating a digital signature for a message $M$ based on an elliptic curve having an order $N$, field characteristic $q$, and base point $G$, generation of the elliptic curve being secure against side channel attacks up to the $(t-1)^{th}$ order comprises: retrieving, from a memory, a plurality of partial private keys $d_i$, where the sum of the partial private keys $d_i$ is a global private key $d$; generating a plurality of partial nonce values $\kappa_i$; generating a plurality of partial masking nonce values $\gamma_i$; computing a plurality of points $\Gamma_i = [\gamma_i]G$, where $[\gamma_i]G$ denotes elliptic curve point addition of the point $G$ to itself $\gamma_i$ times; computing a point $\Gamma = \Sigma_i\Gamma_i$, which denotes elliptic curve point addition of the points $\Gamma_i$ for all $i$; computing a value $\delta = \Sigma_{ij}\kappa_i\gamma_j$, which denotes summation of the product of $\kappa_i\gamma_j$ over $i$ and $j$; applying a modular inversion function to $\delta$ to generate a value $\delta^{-1}$, wherein the inversion function is modulo $N$; computing a point $R = [\delta^{-1}]\Gamma$, and a value $r = R_x$, where $[\delta^{-1}]\Gamma$ denotes elliptic curve point addition of the point $\Gamma$ to itself $\delta^{-1}$ times, and where $R_x$ is the x-coordinate of the point $R$ modulo $N$; computing a set of values $\sigma_i = \Sigma_j\kappa_j d_i$, which denotes summation of the product $\kappa_j d_i$ over $j$; computing a plurality of partial signatures $s_i = m\kappa_i + r\sigma_i$, where $m$ is a hash of the message $M$; computing a value $s = \Sigma_i s_i$; and outputting a pair of values $(r,s)$ as the digital signature of the message $M$, wherein: all elliptic curve point addition computations are executed modulo $q$; all summations are executed modulo $N$; and $i$ and $j$ take values from 1 to t.

Fig. 3

Host device 200

Client device interface module 201

Processor 202
Digital signature generation module 2020

Memory 204
Elliptic curve parameters 2040
Elliptic curve digital signature algorithm 2042
Private key representation 2043
Plurality of private keys 2044
Buffer 2045

Output module 206

Client device 100

10

EP 4 593 327 A1

**Description**

TECHNICAL FIELD OF THE INVENTION

The present invention relates to a computer-implemented method, executed by a host device, of generating a digital signature for a message *M* based on an elliptic curve having an order *N,* field characteristic *q,* and generator point *G,* generation of the elliptic curve digital signature being secure against side channel attacks up to the $(t - 1)^{th}$ order. A corresponding host device is also provided.

BACKGROUND TO THE INVENTION

The elliptic curve digital signature algorithm (ECDSA), i.e. the algorithm via which a digital signature is generated using elliptic curve cryptography is extremely sensitive to physical attacks, both invasive and non-invasive. ECDSA signature generation is also extremely sensitive to the quality of the randomness used in the process.

However, generation of digital signatures using the ECDSA is also ubiquitous, and at the core of several important technologies, such as blockchain and secure communications. For this reason, it is important to ensure that ECDSA can be implemented in a manner which is as secure as possible, in particular being as resistant as possible to misuse, random number generation modifications, side channel analysis, and fault injection exploitation.

The present invention focuses, in particular, on improving the robustness of the ECDSA to side channel analysis. In the context of the present application, the term "side channel analysis" (or equivalently, "side channel attacks") refers to the analysis of cryptographic signals which relies on the manner in which the cryptographic algorithms are physically executed, rather than relying on the nature of the algorithm itself. For example, side channel analysis may be based on electromagnetic leakage, power consumption, timing information, or sound. The concept of higher-order side channel attacks is central to the present invention. This concept is explained in detail in Lomné *et al.* (2014)[1]. A definition of a higher-order side channel attack is also set out in Piret *et al.* (2008)[2] as: "A side-channel attack of order *t* against an *n*-bit target is a side-channel attack based on the combinations of observation and leakage of at most *t* different instants within an observable implementation."

[1] Lomné, V., Prouff, E., Rivain, M., Roche, T., Thillard, A. (2014). How to Estimate the Success Rate of Higher-Order Side-Channel Attacks. In: Batina, L., Robshaw, M. (eds) Cryptographic Hardware and Embedded Systems - CHES 2014. CHES 2014. Lecture Notes in Computer Science, vol 8731. Springer, Berlin, Heidelberg. https://doi.org/10.1007/978-3-662-44709-3_3

[2] Piret, Gilles, and F-X. Standaert. "Security analysis of higher-order Boolean masking schemes for block ciphers (with conditions of perfect masking)." IET Information Security 2.1 (2008): I-II**.**

The basis of elliptic curve cryptography is an elliptic curve which may have an equation:

$$y^2 = (x^3 + ax + b) \bmod p$$

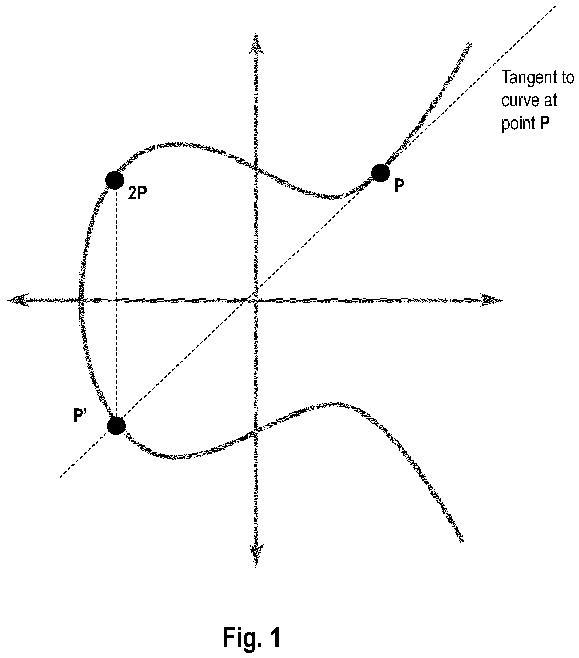

In this equation *a*, *b* and *N* are parameters defining the curve, where the curve is defined over a finite field *F* having a characteristic *p*. *N* is referred to as the order of the curve. In the realm of elliptic curve cryptography, a point addition function is defined. This is illustrated geometrically in Fig. 1, in which a point *P* on the curve is added to itself. This is done by drawing a tangent to the point *P'*. This point is then reflected in the x-axis to give the point *2P = P + P*. Scalar multiplication by *X* of a point on an elliptic curve refers to point addition of the point to itself *X* times. It is also possible to add two different points to each other, in which case the line connecting the two points is drawn, and extended until it intersects the curve again. The result of the point addition of the two points is the reflection of the intersection point in the x-axis. It should be stressed that the illustration in Fig. 1 is a simplified case.

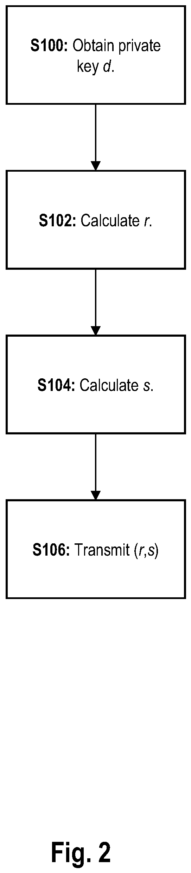

Fig. 2 illustrates the steps of a conventional ECDSA algorithm which may be vulnerable to side-channel analysis.

Specifically, Fig. 2 shows a process by which a sender of a message may generate an elliptic curve digital signature *(r, s)* which can be transmitted along with a message *M* to enable a receiver of the message to verify that the sender of the signature of the message was who they claimed to be. Fig. 2 illustrates a simplified version of the convention ECDSA algorithm as defined in the standard *ANSI X9.62: Public Key Cryptography For The Financial Services Industry: The Elliptic Curve Digital Signature Algorithm (ECDSA).*

In a first step S100, a private key *d* is generated or otherwise obtained. The private key *d* is typically a 256-bit number, i.e. it can take values in the range from 0 to $(2^{256} - 1)$. Typically, the private key *d* is randomly generated in the interval **[1, *N* - 1]** where *N* is the order of the curve.

In step S102 a point *R* is calculated:

$$R = [k]G$$

Where $G$ is the base point of the elliptic curve, and $k$ is a randomly selected nonce value, which is a large random number in the interval [1, N-1]. The square bracket notation denotes the point addition of $G$ to itself $k$ times. A value $r$ is then calculated as the x-coordinate of the point $R$ **mod** $N$.

In step S104, the second part of the signature $s$ is generated:

$$s = k^{-1}(H(M) + r.d) \mod N$$

Here, $k^{-1}$ is calculated using the inverse function **mod** $N$, and $H(M)$ denotes a hash of the message $M$.

$r.d$ represents a normal multiplication of two values.

In step S106, the signature $(r, s)$ is transmitted to the receiver of the message $M$, along with the message. The signature can be verified by the receiver using the sender's public key which is given by:

$$D = [d]G$$

It can be shown, however, that if the value of $k$ is discovered, e.g. using side channel analysis, it is relatively straightforward to derive the sender's private key using:

$$d = r^{-1}(s.k - H(M)) \mod N$$

The present invention provides aims to provide a scheme in which an elliptic curve digital signature can be generated, but which is resistant to high-order side channel attacks.

## SUMMARY OF THE INVENTION

Broadly, the present invention provides a scheme in which a digital signature may be generated which is resistant to high-order side channel attacks by partitioning a private key, a nonce, and a masking nonce, into a plurality of parts and performing a series of operations on those parts in which the full private key, nonce, and masking nonce are never reconstructed. When these components are partitioned into $t$ parts, the digital signature is resistant to side channel attacks of order $(t-1)$. The present invention is an adaptation of techniques first established in the field of multi-party computation (for example as seen in Gennaro *et al.* (2020)[3]) to an easily executable computer-implemented method to be performed on a single host device, which ensures robust resistance to high-order side-channel attacks in the context of digital signature generation.

[3] Gennaro, Rosario, and Steven Goldfeder. "One round threshold ECDSA with identifiable abort." Cryptology ePrint Archive (2020**).

Accordingly, a first aspect of the present invention provides a computer-implemented method, executed by a host device, of generating a digital signature for a message $M$ based on an elliptic curve having an order $N$, field characteristic $q$, and base point $G$, generation of the elliptic curve being secure against side channel attacks up to the $(t-1)^{th}$ order, the computer-implemented method comprising:

> retrieving, from a memory, a plurality of partial private keys $d_i$;
> generating a plurality of partial nonce values $\kappa_i$;
> generating a plurality of partial masking nonce values $\gamma_i$;
> computing a plurality of points $\Gamma_i = [\gamma_i]G$, where $[\gamma_i]G$ denotes elliptic curve point addition of the point G to itself $\gamma_i$ times;
> computing a point $\Gamma = \Sigma_i \Gamma_i$, which denotes elliptic curve point addition of the points $\Gamma_i$ for all $i$;
> computing a value $\delta = \Sigma_{ij} \kappa_i \gamma_j$, which denotes summation of the product of $\kappa_i \gamma_j$ over $i$ and $j$;
> applying a modular inversion function to $\delta$ to generate a value $\delta^{-1}$, wherein the inversion function is modulo $N$;
> computing a point $R = [\delta^{-1}]\Gamma$, and a value $r = R_x$, where $[\delta^{-1}]\Gamma$ denotes elliptic curve point addition of the point $\Gamma$ to itself $\delta^{-1}$ times, and where $R_x$ is the x-coordinate of the point $R$ modulo $N$;
> computing a set of values $\sigma_i = \Sigma_j \kappa_j d_j$, which denotes summation of the product $\kappa_j d_j$ over $j$;
> computing a plurality of partial signatures $s_i = m\kappa_i + r\sigma_i$, where $m$ is a hash of the message $M$;
> computing a value $s = \Sigma_i s_i$; and
> outputting a pair of values $(r, s)$ as the digital signature of the message $M$, wherein:
>
>> all elliptic curve point addition computations are executed modulo $q$;

all summations are executed modulo $N$; and

$i$ and $j$ take values from $1$ to $t$.

The advantage of the present invention arises because a single host device is able to generate an elliptic curve digital signature $(r, s)$ by splitting a private key, a nonce value, and a masking nonce value into t separate parts, and to generate the signature based on these separate parts. It is important to note from the above that generation of the digital signature does not require calculation, at any point, of the private key, the nonce value, or the masking nonce value.

Malicious actors would therefore need knowledge of all $t$ of the partial private keys, nonce values, and masking nonce values in order, for example, to reconstruct the private key from information gleaned from side-channel attacks.

Specifically, the private key $d$ may be a sum of the partial private keys $d_i$. Symbolically:

$$d = \Sigma_i d_i$$

In preferred implementations of the computer-implemented method of the first aspect of the invention, the private key $d$ is not calculated during generation of the digital signature. This is because the computer-implemented method does not require it, and is advantageous because it minimizes the risk of the private key being determined by a malicious actor in any circumstances. According to the invention, the private key could only be determined by determining e.g. all of the partial private keys $d_i$. The private key $d$ may be predetermined, and may be a key that is certified or preinstalled in a device such as the host device which executes the computer-implemented method of the first aspect of the invention. Such a private key may be referred to as a "long term" private key. The plurality of partial private keys $d_i$ may also be predetermined, for example during a key generation process which takes place before the computer-implemented method of the first aspect of the invention. In other cases, the computer-implemented method may further comprise the step of generating the plurality of partial private keys $d_i$. If so, the method may further comprise retrieving the private key $d$ from a memory, and generating the plurality of partial private keys $d_i$ such that $d = \Sigma_i d_i$.

Similarly, a nonce value $\kappa$ may be a sum of the partial nonce values $\kappa_i$. Symbolically:

$$\kappa = \Sigma_i \kappa_i$$

In preferred implementations of the computer-implemented method of the first aspect of the invention, the nonce value $\kappa$ is not calculated during generation of the digital signature. Like with the private key, this is because the computer-implemented method does not require it, and is advantageous because it minimizes the risk of the nonce value being determined by a malicious actor in any circumstances. It has been shown above that if a malicious actor is aware of the nonce value $\kappa$, they can derive the private key. By splitting the nonce value $\kappa$ into the partial nonce values $\kappa_i$, it is possible to ensure that a malicious actor can only obtain the nonce value $\kappa$ and therefore the private key $d$ by obtaining all of the partial nonce values $\kappa_i$.

Similarly again, a nonce value $\gamma$ may be a sum of the partial nonce values $\gamma_i$. Symbolically:

$$\gamma = \Sigma_i \gamma_i$$

In preferred implementations of the computer-implemented method of the first aspect of the invention, the masking nonce value $\gamma$ is not calculated during generation of the digital signature. Like with the private key and the nonce value, this is because the computer-implemented method does not require it, and is advantageous because it minimizes the risk of the masking nonce value being determined by a malicious actor in any circumstances. If a malicious actor is able to identify the masking nonce, then they may be able to infer information which is linked to the nonce value itself or the private key itself.

From the definitions above, it can be seen that:

$$\kappa\gamma = \Sigma_{ij} \kappa_i \gamma_j$$

From the definitions above, it can also be seen that:

$$\kappa d = \Sigma_{ij} \kappa_i d_j$$

The computer-implemented method of the first aspect of the invention refers in parts to computing various quantities, and provides a definition of those quantities. For example, the computer-implemented method includes computing a point $\Gamma = \Sigma_i \Gamma_i$. The definition should be understood as just that, a definition. It should not be interpreted as a requirement that the point $\Gamma$ is necessarily calculated by summing the points $\Gamma_i$ for all $i$. It is explicitly envisaged that other ways of computing $\Gamma$ are covered by the computer-implemented method, as long as the value which is ultimately computer is equivalent to $\Sigma_i \Gamma_i$. Of course, in one implementation, $\Gamma$ may be computed by summing $\Gamma_i$ for all $i$ but other equivalent techniques are also envisaged. For the avoidance of doubt, this reasoning does not apply only to the computation of $\Gamma$, but for the computation of all points and values as required by the computer-implemented method of the first aspect of the invention (e.g. $\Gamma_i$, $\Gamma$, $\delta$, $\delta^{-1}$, **R**, **r**, $\sigma_i$, **$s_i$**, **s**).

The computer-implemented invention of the first aspect of the invention includes several steps which relate to elliptic curve point addition. This process has been described earlier in this disclosure, and the operation is known. Variously, this step may be applied $\gamma_i$ times, or $\delta^{-1}$ times to a given point. It will be acknowledged that $\gamma_i$ and $\delta^{-1}$ may be very large numbers which would necessitate the elliptic curve point addition to be executed many times. In order to ensure that the elliptic curve point addition is performed efficiently, the computation may include the application of one or more of a plurality of known algorithms for elliptic curve point addition such as the double-and-add algorithm, the windowed method, the sliding-window method, the **w**-ary non-adjacent form (wNAF) method, the Montgomery ladder, or addition chains scalar point multiplication. In each of these cases, for scalar multiplication for a **k**-bit scalar (i.e. elliptic curve point addition of a point to itself the **k**-bit number of times), the multiplication may be performed in, on average, around $1.5k$ steps.

This enables execution of elliptic curve point addition while obviating the need to execute a number of operations on the order of the value of e.g. $\gamma_i$ or $\delta^{-1}$, thereby greatly increasing the efficiency of the computation.

At present, side-channel attacks of order 1 to 3 are thought to be possible. In order to be resistant to such side-channel attacks, the value of **t** may be 2, 3, or 4. These values ensure that a robust defence is provided against higher-order side-channel attacks without giving rise to unnecessarily arduous computation requirements.

After generating the plurality of partial private keys $d_i$, the computer-implemented method may further comprise computing partial public keys $D_i = [d_i]G$, where $[d_i]G$ denotes elliptic curve point addition of the power **G** to itself $d_i$ times. From this, it will be appreciated that the partial public keys are points, rather than numbers or values. The elliptic curve point addition may be executed using the scalar point multiplication using a known algorithm, as before, in order to avoid the need to perform a number of operations of the order of the value of the partial private keys $d_i$. The computer-implemented method may then comprise computing a global public key $D = \Sigma_i D_i$, where $\Sigma_i D_i$ denotes elliptic curve point addition of the points $D_i$ for all $i$. In response to a determination that the global public key **D** is equal to **O**, that is the infinity point (which is the identity in the additive group), the computer-implemented method may further comprise discarding the generated plurality of partial private keys $d_i$ and generating a new plurality of partial private keys $d_i'$. The new plurality of partial keys are such that $$\Sigma_i d_i' = d$$, where **d** is the same global private key, which is not calculated at any point during the generation of the digital signature.

Similarly, if it is determined that, or in response to a determination that **r = 0**, the computer-implemented method may further comprise discarding the generated plurality of partial nonce values $\kappa_i$, and generating a new plurality of nonce values $\kappa_i'$ and/or discarding the generated plurality of partial masking nonce values $\gamma_i$, and generating a new plurality of masking nonce values $\gamma_i'$.

The new plurality of partial nonce values $\kappa_i'$ may be such that $$\Sigma_i \kappa_i' = \kappa'$$, where $\kappa'$ is a new global nonce value, which is not calculated at any point during the generation of the digital signature.

The plurality of partial masking nonce values $$\Sigma_i \gamma_i' = \gamma'$$ where $\gamma'$ is a new global masking nonce value, which is not calculated at any point during the generation of the digital signature.

It will be acknowledged that it is only necessary to update either the partial nonce values or the partial masking nonce values because updating these will lead to a new value of $\Gamma_i$, $\Gamma$, $\delta$, and therefore $\delta^{-1}$, on the basis of which **r** is calculated.

If only a new plurality of partial nonce values $\kappa_i'$ is generated, the computer-implemented method may further comprise recalculating $\delta$, $\delta^{-1}$, **R**, and **r**. If only a new plurality of partial masking nonce values $\gamma_i'$ is generated, the computer-implemented method may further comprise recalculating $\Gamma_i$, $\Gamma$, **R**, and **r**. If a new plurality of partial nonce values $\kappa_i'$ and a new plurality of partial masking nonce values $\gamma_i'$ are generated, the computer-implemented method may comprise recalculating $\Gamma_i$, $\Gamma$, $\delta$, $\delta^{-1}$, **R**, and **r**. If the recalculated value of **r = 0**, the process may be repeated as necessary.

Additionally, if it is determined that, or in response to a determination that **r = 0**, the computer-implemented method may further comprise discarding the generated plurality of partial private keys $d_i$ and generating a new plurality of partial private keys $d_i'$. The new plurality of partial keys are such that $$\Sigma_i d_i' = d$$, where **d** is the same global private key, which is not calculated at any point during the generation of the digital signature. Essentially, the process may be aborted and started again.

If it is determined that, or in response to a determination $s = 0$ the computer-implemented method may further comprise discarding the generated plurality of partial private keys $d_i$ and generating a new plurality of partial private keys $d_i'$.

The new plurality of partial keys are such that $\Sigma_i d_i' = d$, where $d$ is the same global private key, which is not calculated at any point during the generation of the digital signature.

Similarly, if it is determined that, or in response to a determination that $s = 0$, the computer-implemented method may further comprise discarding the generated plurality of partial nonce values $\kappa_i$, and generating a new plurality of nonce values $\kappa_i'$ and/or discarding the generated plurality of partial masking nonce values $\gamma_i$, and generating a new plurality of masking nonce values $\gamma_i'$.

As before, the new plurality of partial nonce values $\kappa_i'$ may be such that $\Sigma_i \kappa_i' = \kappa'$, where $\kappa'$ is a new global nonce value, which is not calculated at any point during the generation of the digital signature.

As before, the plurality of partial masking nonce values $\Sigma_i \gamma_i' = \gamma'$ where $\gamma'$ is a new global masking nonce value, which is not calculated at any point during the generation of the digital signature.

The value of the $s_i$ (which contains a term $m\kappa_i$) can be changed simply by calculating a new plurality of partial nonce values $\kappa_i'$. Accordingly, in such cases, the computer-implemented method may further comprise recalculating $s_i$ using the new plurality of partial nonce values $\kappa_i'$. It should be noted that would also necessarily comprise recalculating $\delta$, $\delta^{-1}$, $\sigma_i$, $R$, and $r$, which also depend on the value of the partial nonce values $\kappa_i$.

The value of the $s_i$ (which contains a term containing $r$) can be changed simply by calculating a new plurality of partial masking nonce values $\gamma_i'$. Accordingly, in such cases, the computer-implemented method may further comprise recalculating $s_i$ using the new plurality of partial masking nonce values $\gamma_i'$. It should be noted that would also necessarily comprise recalculating $\Gamma_i$, $\Gamma$, $\delta$, $\delta^{-1}$, $R$, and $r$, which also depend on the value of the partial masking nonce values $\gamma_i$.

The value of the $s_i$ (which contains a term containing $\sigma_i$) can be changed simply by calculating a new plurality of partial private keys $d_i'$. Accordingly, in such cases, the computer-implemented method may further comprise recalculating $s_i$ using the new plurality partial private keys $d_i'$. It should be noted that would also necessarily comprise recalculating the $\sigma_i$, which also depend on the value of the partial private keys $d_i'$.

In the event that $s = 0$, the computer-implemented method may comprise recalculating one or more of the partial private keys $d_i'$, the partial masking nonce values $\gamma_i'$, and the partial nonce values $\kappa_i'$, and calculating new $s_i'$ using the recalculated values, as well as recalculating any intermediate values (e.g. $\Gamma_i$, $\Gamma$, $\delta$, $\delta^{-1}$, $R$, $r$, $\sigma_i$) as necessary.

While maintaining the same global private key $d$, a need may arise to generate a new digital signature based on a different set of partial private keys $\hat{d}_i$. Accordingly, the computer-implemented method may further comprise receiving a request for a new or refreshed plurality of partial private keys $\hat{d}_i$ such that $\Sigma_i \hat{d}_i = d$. The computer-implemented method may then further comprise generating a new or refreshed plurality of partial private keys $\hat{d}_i$ such that $\Sigma_i \hat{d}_i = d$. Generating the new or refreshed plurality of partial private keys $\hat{d}_i$ may comprise adding or subtracting a respective value to each of the initial partial private keys $d_i$, and then determining a value to add to the remaining partial private key $d_i$ such that $\Sigma_i \hat{d}_i = d$. Symbolically, generating the refreshed plurality of partial private keys $\hat{d}_i$ may comprise selecting $n - 1$ values $\theta_i$; setting $\hat{d}_i = d_i + \theta_i$ for $i < n - 1$; and $\hat{d}_{n-1} = d_{n-1} - \sum_0^{n-2} \theta_i$.

The quantity s which forms part of the digital signature relies on a hash $m$ of a message $M$ which is to be accompanied by the digital signature. The computer-implemented method may therefore further comprise applying a hashing algorithm to the message $M$ to generate the hash $m$. Any known hashing algorithm or cryptographic hash function is suitable for this process. Suitable cryptographic hash functions may be found in the Secure Hash Standard (FIPS PUB 180-4)[4].

[4] **https://nvlpubs.nist.gov/nistpubs/FIPS/NIST.FIPS.180-4.pdf**

The computer-implemented method of the first aspect of the present invention is executed by a host device. We now discuss this feature in more detail. The host device is preferably a single device which is configured to execute all of the step of the computer-implemented method of the first aspect of the present invention. In other words, a single host device is configured to generate e.g. all of the partial private keys, partial nonce values, and partial masking nonce values, and then to execute the subsequent processing on those generated quantities.

The host device may be in the form of a computer such as a laptop computer, a desktop computer, a tablet, or a smartphone. The host device may comprise a dedicated module which is configured to execute the computer-implemented method of the first aspect of the invention, which may be implemented in either hardware (e.g. a specific processing module or chip) or software (e.g. in the form of executable code stored in a memory, which when executed by a processor of the host device, causes it to execute the computer-implemented method of the first aspect of the invention). Alternatively, the host device may be a device which is connectable to a computer,

e.g. via a physical connection such as a USB connection, or a wireless connection. Such a connectable device may comprise a dedicated module which is configured to execute the computer-implemented method of the first aspect of the invention, as before, and to output the generated digital signature to the computer to which it is connected.

A second aspect of the present invention provides a host device configured to execute the computer-implemented method of the first aspect of the invention. The optional features set out above in respect of the first aspect of the invention apply equally well to the second aspect of the invention, except where clearly technically incompatible, or where context dictates otherwise. The host device may be in the form of a computer such as a smartphone, desktop computer, laptop computer, or tablet. Alternatively, the host device may be in the form of bespoke hardware such as a digital signature generation module, which maybe implemented in the form of a chip or other equivalent computer programming logic. The digital signature generation module may comprise an authenticator.

A third aspect of the invention provides a computer program product comprising instructions which, when the program is executed by a computer, cause the computer to carry out the computer-implemented method of the first aspect of the invention. The computer program product may be a downloadable product. The computer program product of the third aspect of the invention may be loaded on the host device of the second aspect of the invention in order to enable it to execute the computer-implemented method of the first aspect of the invention.

The invention includes the combination of the aspects and preferred features described except where such a combination is clearly impermissible or expressly avoided.

BRIEF DESCRIPTION OF THE DRAWINGS

Embodiments of the present invention will now be described with reference to the accompanying drawings, in which:

- Fig. 1 is a diagram of an elliptic curve to illustrate the underlying principles of elliptic curve cryptography.

- Fig. 2 is a flowchart illustrating a standard elliptic curve digital signature generation process.

- Fig. 3 is a schematic diagram including a host device which may be configured to execute the computer-implemented method of the first aspect of the invention.

- Fig. 4 is a flowchart illustrating a high-level process in which a digital signature is requested, generated, and output.

- Fig. 5A is a flowchart illustrating a key generation process which may feature in implementations of the computer-implemented method of the first aspect of the invention.

- Figs. 5B and 5C are flowcharts illustrating a signature generation process according to a computer-implemented method of the first aspect of the present invention.

DETAILED DESCRIPTION OF THE DRAWINGS

Aspects and embodiments of the present invention will now be discussed with reference to the accompanying figures. Further aspects and embodiments will be apparent to those skilled in the art. All documents mentioned in this text are incorporated herein by reference.

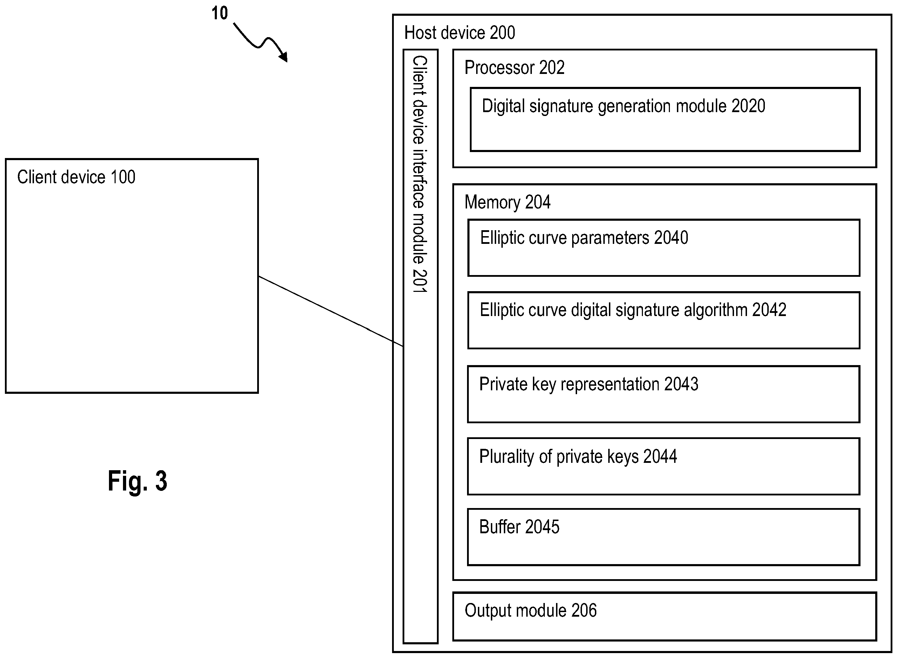

Fig. 3 is a system diagram depicting an example of a system 10 which may be configured to execute the computer-implemented method of the present invention. The system 10 comprises a client device 100 and a host device 200. It should be stressed that all of the computation involved in the actual generation of the digital signature, i.e. the computer-implemented method according to the first aspect of the present invention, is executed at the host device 200. The client device 100 is a user device which requests the digital signature. In some cases, the host device 200 may be part of the client device 100, or the client device may comprise the processor 202, memory 204, and output module 206, such that all computation is executed on the client device 100 itself. The client device 100 is connected to the host device 200 via a client device interface module 201 of the host device 200. The connection may be a wired, or physical connection, in which case the client device interface module 201 may be in the form of a USB connection. In such cases, the USB port would generally be located on the client device 100, and the host device would be plugged into the client device 100. Alternatively, the connection between the client device 100 and the host device 200 may be a wireless connection such as a Wi-Fi connection or a Bluetooth connection.

The host device 200 comprises a processor 202, a memory 204 and an output module 206. The processor 202 comprises a digital signature generation module 2020. Herein, the term "module" refers to a functional module of the processor 204, which may be implemented in the form of hardware (i.e. a specific hardware module adapted to generate the digital signature according to the computer-implemented method of the first aspect of the invention, which may be in the form of a chip, or equivalent component), or software (i.e. code, which when executed by the processor 204, causes it to execute the computer-implemented method of the first aspect of the invention). The memory 204 stores the elliptic curve parameters 2040, e.g. the field characteristic *q*, the generator point *G*, the order of the curve *N*, as well as parameters *a*, *b* defining the equation of the curve. The elliptic curve parameters may further comprise a cofactor *h*. The memory 204 further stores the elliptic curve digital signature generation algorithm 2042, which is retrieved and executed by the digital signature generation module 2020. The memory also stores a representation of the private key 2043, and may store a plurality of partial private keys $d_i$ 2044. The memory also includes a buffer 2045, which is a temporary store of data which may be used to store e.g. intermediate values generated during the execution of the elliptic curve digital signature algorithm 2042. It should be stressed that in the present context, the term "elliptic curve digital signature algorithm" is used to refer to the signature generation algorithm which forms the focus of this patent application, rather than prior art elliptic curve digital signature algorithms.

The host device 206 further comprises an output module 206 which is configured to output a generated digital signature to e.g. the client device 100 after it has been generated.

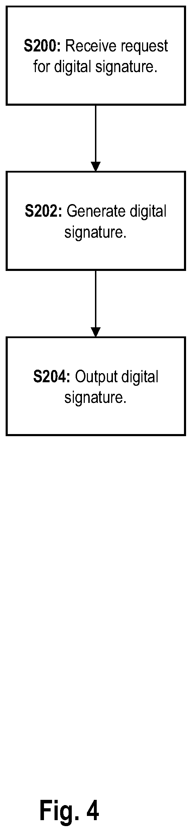

Fig. 4 shows a high-level series of steps which may be executed by the system 10 depicted in Fig. 3. In a first step S200, a request for a digital signature is received at the host device 200. The request may originate from the client device 100 and be received at the host device 200 via the client device interface module 201. In response to the request, in step S202, a digital signature may be generated by the digital signature generation module 2020 of the processor 202 of the host device 200. Then, in step S204, the generate digital signature may be output by the output module 206 of the host device 200, e.g. to the client device 100. The digital signature may be output to the client device 100 via the client device interface module 201.

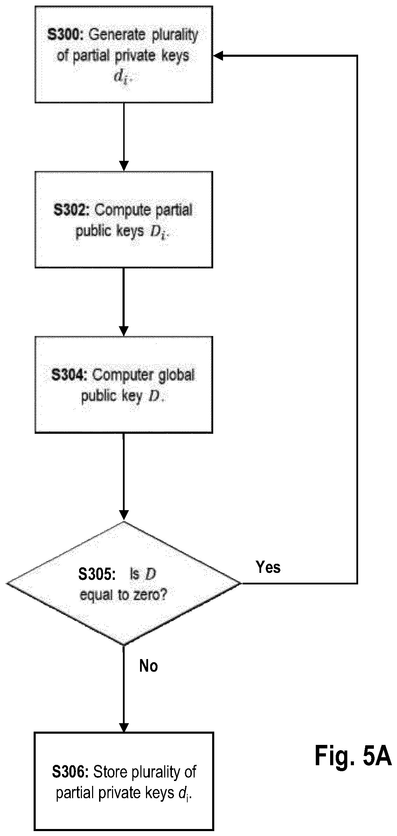

We now discuss step S202, namely the process by which the digital signature is generated, with reference to Figs. 5A to 5C, which illustrate an example of a scheme falling within the scope of the computer-implemented method of the first aspect of the invention. Digital signatures generated according to this scheme, and indeed the entire digital signature generation process is secure against side channel attacks up to the $(t - 1)^{th}$ order, due to the fragmentation of various quantities into *t* parts, with those quantities never being computed in total. To illustrate this, in the description below, we use an example in which the value of *t* is 3, and thus where the scheme is secure against $2^{nd}$ order side channel attacks. The reader will acknowledge that the computer-implemented method described is readily generalizable to any value of *t*.

In order to generate the digital signature, the digital signature generation module 2020 may first retrieve the elliptic curve parameters 2040 the elliptic curve digital signature generation algorithm 2042, and a representation of the private key 2043 from the memory 204 of the host device 200. It should be noted that in the following description, the following is true (unless explicitly stated otherwise):

- All elliptic curve point addition operations (or equivalent) are executed modulo *q*, where *q* is the field characteristic of the elliptic curve.

- All points summations are executed modulo *N*, where *N* is the order of the elliptic curve.

Beginning with Fig. 5A, which illustrates the key generation process, the scheme begins at step S300, in which a plurality of partial private keys $d_i$ are generated:

$$d_i = [d_1, d_2, d_3]$$

The partial private keys $d_i$ sum to a global private key *d*:

$$d = d_1 + d_2 + d_3$$

It will be acknowledged from the subsequent description of Figs. 5A to 5C that the global private key *d* is never calculated throughout the digital signature generation process. The partial private keys $d_i$ may be stored in the buffer 2045 so that they may be swiftly retrieved later on. In step S300, a plurality of partial public keys $D_i$ are calculated, where:

$$D_i = [d_i]G$$

Thus:

$$D_1 = [d_1]G$$

$$D_2 = [d_2]G$$

$$D_3 = [d_3]G$$

To clarify, the square bracket notation used above denotes that the generator point $G$ is added to itself $d_i$ times, using elliptic curve point addition, which is a well-defined operation. As discussed previously, this does not necessarily mean that the partial public keys $D_i$ are calculated by adding $G$ to itself $d_i$ times: such a calculation may not be computationally feasible. The calculated partial public keys $D_i$ are points on the elliptic curve. The partial public keys $D_i$ may be stored in the buffer 2045 so that they may be swiftly retrieved later on.

In step S304, the global public key $D$ is calculated:

$$D = \Sigma_i D_i$$

To clarify, given that the $D_i$ are points on the elliptic curve, the sigma notation denotes elliptic curve point addition of the points $D_i$, i.e.

$$D = D_1 + D_2 + D_3$$

It will be appreciated from the properties of elliptic curve point addition that:

$$D = [d]G$$

In step S305, it is determined whether the global public key $D$ is equal to infinite point (identity element of additive elliptic additive group). If it is determined that the global public key $D$ is equal to the identity element, then the process returns to step S300, and a new plurality of partial private keys $d_i'$ are generated, which sum to a new global private key $d' \neq d$ to ensure that the new global public key $D' \neq D$ is not equal to identity element (infinite point).

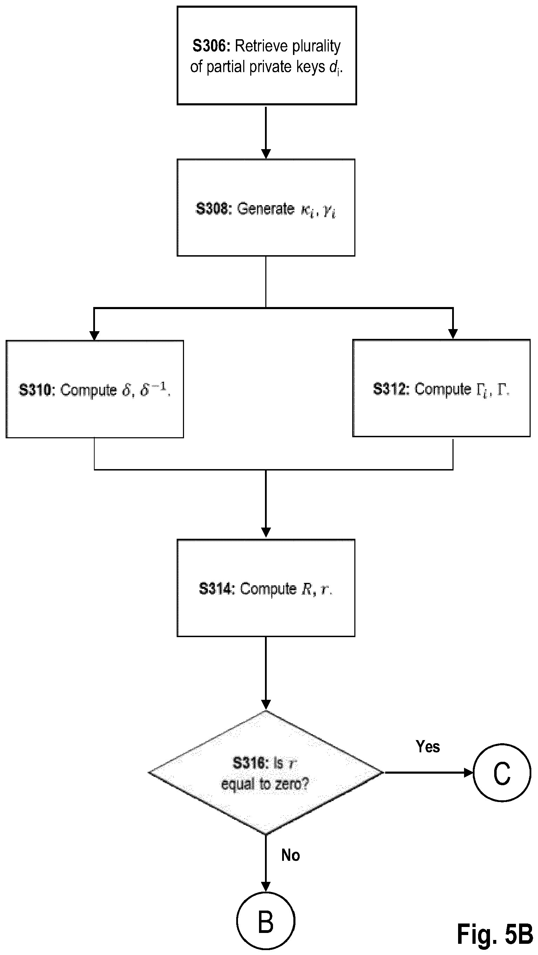

If it is determined that the global public key $D$ is not equal to identity element (infinite point), the process continues to step S306, in which the plurality of partial keys $d_i$ 2044 are stored in the memory 204 of the host device 200. Alternatively, the plurality of partial keys may be stored in the buffer 2045The plurality of partial private keys $d_i$ having been generated according to the method of Fig. 5A, we now turn to Fig. 5B. In step S306, the plurality of partial keys $d_i$ 2044 are retrieved from the memory 204 of the host device 200, or the buffer 2045 if they are stored there.

In step S308, a plurality of partial nonce values $\kappa_i$ and a plurality of partial masking nonce values $\gamma_i$ are generated.

The plurality of partial nonce values $\kappa_i$ and a plurality of partial masking nonce values $\gamma_i$ are integer values in the range **[1, $N$ - 1]** where $N$ is the order of the curve.

The partial nonce values $\kappa_i$ are such that:

$$\Sigma_i \kappa_i = \kappa_1 + \kappa_2 + \kappa_3 = \kappa$$

Here, $\kappa$ may be referred as a global nonce value. It will be acknowledged from the subsequent description of Figs. 5A to 5C that $\kappa$ is never calculated in full throughout the digital signature generation process. The partial nonce values $\kappa_i$ may be stored in the buffer 2045 so that they may be swiftly retrieved later on.

The partial masking nonce values $\gamma_i$ are such that:

$$\Sigma_i \gamma_i = \gamma_1 + \gamma_2 + \gamma_3 = \gamma$$

Here, $\gamma$ may be referred to as a global masking nonce value.

It will be acknowledged from the subsequent description of Figs. 5A to 5C that $\gamma$ is never calculated in full throughout the digital signature generation process. The partial masking nonce values $\gamma_i$ may be stored in the buffer 2045 so that they may be swiftly retrieved later on.

By never calculating the quantities $\kappa$, $\gamma$, and *d* throughout the signature generation process, and instead dividing them into *t* parts, it becomes necessary for malicious actors to establish all of e.g. the partial private keys $d_i$, partial nonce values $\kappa_i$, partial masking nonce values $\gamma_i$ in order to reconstruct the quantities which were used to generate the digital signature.

Steps S310 and S312 may take place at the same time as each other, or in either order. In step S310, the partial nonce values $\kappa_i$ and partial masking nonce values $\gamma_i$ may be retrieved from the buffer 2045, and a quantity $\delta$ may be computed:

$$\delta = \Sigma_{ij}\kappa_i\gamma_j$$

$$\delta = k_1\gamma_1 + \kappa_1\gamma_2 + \kappa_1\gamma_3 + \kappa_2\gamma_1 + \kappa_2\gamma_2 + \kappa_2\gamma_3 + \kappa_3\gamma_1 + \kappa_3\gamma_2 + \kappa_3\gamma_3$$

It is straightforward to see that:

$$\delta = (\kappa_1 + \kappa_2 + \kappa_3)(\gamma_1 + \gamma_2 + \gamma_3) = \kappa \cdot \gamma$$

It should be noted that $\delta$ is calculated without ever using the global nonce value $\kappa$ or the global masking nonce value $\gamma$, hence the improved robustness of the digital signature generation algorithm of the present invention to e.g. side channel attacks. The intermediate value $\delta$ may be stored in the buffer 2045.

After the quantity $\delta$ is computed in step S310, it may be retrieved from the buffer 2045, and a corresponding quantity $\delta^{-1}$ is computed. $\delta^{-1}$ is the inverse of the quantity $\delta$ modulo *N*, where *N* is the order of the elliptic curve. Computing the inverse of a quantity modulo *N* may be achieved using known algorithms such as the Euclidean extended algorithm for calculating a modular inverse. The inverse of the intermediate quantity $\delta^{-1}$ may be stored in the buffer 2045 for ease of retrieval.

Unlike in prior art digital signature algorithms, according to the present invention, the nonce inversion step of computing $\delta^{-1}$ does not need to be protected against attack. Even if partial, or indeed, complete information about $\delta$ is leaked, an attacked must gain full knowledge of all of the partial masking nonce values $\gamma_i$, which requires an attack of order *t*. Even when the value of t is low, e.g. 2 or 3, such attacks require a great deal of sophistication and difficult to carry out effectively.

In step S312, a different value $\Gamma_i$ is first calculated:

$$\Gamma_i = [\gamma_i]G$$

Thus, the $\Gamma_i$ are a set of points on the elliptic curve, each obtained by adding (by elliptic curve point addition) the generator point or base point *G* to itself $\gamma_i$ times. The elliptic curve point addition may be executed using the same scheme as was used in step S302. The points $\Gamma_i$ may be stored in the buffer 2045.

After the set of points $\Gamma_i$ have been computed, they may be retrieved from the buffer 2045 and a point $\Gamma$ may be computed:

$$\Gamma = \Sigma_i\Gamma_i = \Gamma_1 + \Gamma_2 + \Gamma_3$$

Again, this denotes elliptic curve point addition of the points $\Gamma_i$. The point $\Gamma$ may be stored in the buffer 2045.

In step S314, the point $\Gamma$ may be retrieved from the buffer 2045 and a point *R* may be computed:

$$R = [\delta^{-1}]\Gamma$$

*R* is a point on the curve generated by the addition of $\Gamma$ to itself $\delta^{-1}$ times (using elliptic curve point addition). It can be shown relatively straightforwardly that:

$$R = [\kappa^{-1}]G$$

This is analogous to the nonce inversion step in the known ECDSA. Thus, it may be seen that the use of the plurality of partial masking nonce values $\gamma_i$, and the intermediate values $\delta$ and $\delta^{-1}$ enable the quantity $\boldsymbol{R}$ to be calculated without needing to calculate the actual nonce value $\kappa$, thereby greatly improving the security of the digital signature generation process.

After the point $\boldsymbol{R}$ has been calculated, the partial masking nonce values $\gamma_i$ may be discarded from e.g. the buffer 244, in order to free up storage capacity, because they are no longer required in the calculation of the digital signature. Alternatively, they may be discarded later on, e.g. after the calculation of the value $\boldsymbol{r}$.

The value $\boldsymbol{r}$ is then computed, which is the x-coordinate of the point $\boldsymbol{R}$ modulo $\boldsymbol{N}$. $\boldsymbol{r}$ forms one component of the digital signature which is ultimately output.

In step S316 it is determined whether $\boldsymbol{r}$ is equal to zero.

Various steps may take place if it is determined that $\boldsymbol{r}$ is equal to zero, denoted "C" in Fig. 5B. Essentially, steps need to be carried out which ensure that, when $\boldsymbol{r}$ is recomputed, a different value is obtained. The value $\boldsymbol{r}$ depends on only the plurality of partial nonce values $\kappa_i$, as demonstrated later (the masking nonce values $\gamma_i$ are only a tool which conceals the value of the nonce values $\kappa_i$ during the signature generation process). Thus, in response to a determination that $\boldsymbol{r}$ is equal to zero, the process may return to step S308 and regenerate the plurality of masking partial nonce values $\kappa_i$. When the new plurality of partial nonce values $\kappa_i$ are regenerated, the process may then proceed to step S310, in which a new value of the intermediate values $\delta$ and $\delta^{-1}$ are computed. Then, the process may return to step S314 in which $\boldsymbol{R}$, and $\boldsymbol{r}$ are recomputed.

In other cases, if it is determined that $\boldsymbol{r}$ is equal to zero in step S316, the process may be aborted entirely, and return to step S300.

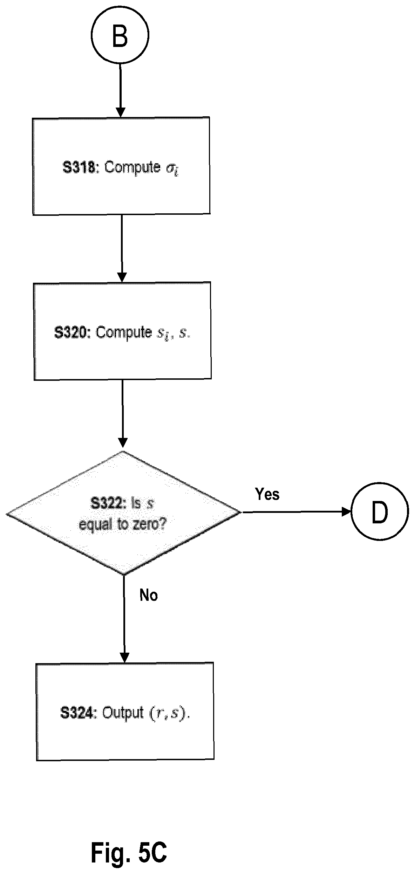

If it is determined in step S316 that $\boldsymbol{r}$ is not equal to zero, the process continues to step S318 in Fig. 5C. In this step, a plurality of values $\sigma_i$ are computed:

$$\sigma_i = \Sigma_j \kappa_j d_i$$

Thus:

$$\sigma_1 = d_1(\kappa_1 + \kappa_2 + \kappa_3)$$

$$\sigma_2 = d_2(\kappa_1 + \kappa_2 + \kappa_3)$$

$$\sigma_3 = d_3(\kappa_1 + \kappa_2 + \kappa_3)$$

From this, it can be shown that:

$$\Sigma_i \sigma_i = (d_1 + d_2 + d_3)(\kappa_1 + \kappa_2 + \kappa_3) = d \cdot \kappa$$

But, as with the global nonce value $\kappa$, global masking nonce value $\gamma$, and global private key $\boldsymbol{d}$, the global value $\sigma$ is never calculated.

In step S320, a plurality of values $\boldsymbol{s}_i$ are computed:

$$s_i = m\kappa_i + r\sigma_i$$

Thus:

$$s_1 = m\kappa_1 + r \cdot d_1 \cdot (\kappa_1 + \kappa_2 + \kappa_3)$$

$$s_2 = m\kappa_2 + r \cdot d_2 \cdot (\kappa_1 + \kappa_2 + \kappa_3)$$

$$s_3 = m\kappa_3 + r \cdot d_3 \cdot (\kappa_1 + \kappa_2 + \kappa_3)$$

At this point, the partial private keys $\boldsymbol{d}_i$ and the partial nonce values $\kappa_i$ may be discarded, since they are no longer required to calculate **s,** the remaining part of the digital signature.

Finally, the second part of the signature **s** is calculated:

$$s = \Sigma_i s_i$$

Thus:

$$s = m \cdot (\kappa_1 + \kappa_2 + \kappa_3) + r \cdot (d_1 + d_2 + d_3)(\kappa_1 + \kappa_2 + \kappa_3)$$

$$s = (m + d \cdot r) \cdot \kappa$$

However, this value is reached without ever calculating the values **d** or $\kappa$, in contrast to the classic ECDSA algorithm, which requires the direct use of the private key **d** and the ECDSA nonce value $\kappa$. Here, it can be seen that the nonce value $\kappa$ used in the present process is equivalent to the inverse of the nonce value **k** used in the classic ECDSA algorithm exemplified in Fig. 2.

In step S322, it is determined whether **s** is equal to zero. If it is, the process may abort and start again at step S300 of Fig. 3A. Alternatively, because the value of s depends on the value of **r,** the steps which were taken in the event that **r** was determined to be zero in step S316 may be taken in the event that **s** is determined to be zero.

If it is determined that **s** is not equal to zero, the digital signature **(r, s)** is output by the digital signature generation module 2020 in step S324.

Returning now to Fig. 4, in step S204 the digital signature **(r, s)** is output by the output module 206 of the host device 200, e.g. via the client device interface module 201 to the client device 100 and the process is complete.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

**Claims**

1. A computer-implemented method, executed by a host device, of generating a digital signature for a message **M** based on an elliptic curve having an order **N,** field characteristic **q,** and base point **G,** generation of the elliptic curve being secure against side channel attacks up to the **(t - 1)**th order, the computer-implemented method comprising:

retrieving, from a memory, a plurality of partial private keys $d_i$, where the sum of the partial private keys $d_i$ is a global private key **d;**
generating a plurality of partial nonce values $\kappa_i$;
generating a plurality of partial masking nonce values $\gamma_i$;

computing a plurality of points $\Gamma_i = [\gamma_i]G$, where $[\gamma_i]G$ denotes elliptic curve point addition of the point $G$ to itself $\gamma_i$ times;

computing a point $\Gamma = \Sigma_i \Gamma_i$, which denotes elliptic curve point addition of the points $\Gamma_i$ for all $i$;

computing a value $\delta = \Sigma_{ij} \kappa_i \gamma_j$, which denotes summation of the product of $\kappa_i \gamma_j$ over $i$ and $j$;

applying a modular inversion function to $\delta$ to generate a value $\delta^{-1}$, wherein the inversion function is modulo $N$;

computing a point $R = [\delta^{-1}]\Gamma$, and a value $r = R_x$, where $[\delta^{-1}]\Gamma$ denotes elliptic curve point addition of the point $\Gamma$ to itself $\delta^{-1}$ times, and where $R_x$ is the $x$-coordinate of the point $R$ modulo $N$;

computing a set of values $\sigma_i = \Sigma_j \kappa_j d_i$, which denotes summation of the product $\kappa_j d_i$ over $j$;

computing a plurality of partial signatures $s_i = m\kappa_i + r\sigma_i$, where $m$ is a hash of the message $M$;

computing a value $s = \Sigma_i s_i$; and

outputting a pair of values $(r, s)$ as the digital signature of the message $M$,

wherein:

    all elliptic curve point addition computations are executed modulo $q$;
    all summations are executed modulo $N$; and
    $i$ and $j$ take values from $1$ to $t$.

2. The computer-implemented method of claim 1, further comprising:

    retrieving the global private key $d$ from a memory; and
    generating the plurality of partial private keys $d_i$ such that $d = \Sigma_i d_i$.

3. The computer-implemented method of claim 2, further comprising:

    computing a plurality of partial public keys $D_i = [d_i]G$, where $[d_i]G$ denotes the application of the elliptic curve point addition operation $d_i$ times, the first application being to the point $G$;
    computing the global public key $D = \Sigma_i d_i G$; and
    in response to a determination that $D = 0$, the identity point, discarding the generated plurality of partial private keys $d_i$, and generating a new plurality of partial private keys $d_i'$.

4. The computer-implemented method of any one of claims 1 to 3, wherein:
    $t$ is equal to 2, 3, or 4.

5. The computer-implemented method of any one of claims 1 to 4, wherein:
    the global private key $d$ is not calculated at any point.

6. The computer-implemented method of any one of claims 1 to 5, wherein:
    a global nonce value $\kappa = \Sigma_i \kappa_i$ is not calculated at any point.

7. The computer-implemented method of any one of claims 1 to 6, wherein:
    a global masking nonce value $\gamma = \Sigma_i \gamma_i$ is not calculated at any point.

8. The computer-implemented method of any one of claims 1 to 7, wherein, if $r = 0$, the computer-implemented method further comprises:

    discarding the generated plurality of partial private keys $d_i$, and generating a new plurality of partial private keys $d_i$; and/or
    discarding the generated plurality of partial nonce values $\kappa_i$, and generating a new plurality of nonce values $\kappa_i'$.

9. The computer-implemented method of any one of claims 1 to 8, wherein:
    if $s = 0$, the computer-implemented method further comprises:

    discarding the generated plurality of partial private keys $d_i$, and generating a new plurality of partial private keys $d_i$; and/or
    discarding the generated plurality of partial nonce values $\kappa_i$, and generating a new plurality of nonce values $\kappa_i'$.

10. The computer-implemented method of any one of claims 1 to 9, further comprising generating a refreshed plurality of partial private keys $\hat{d}_i$ such that $\Sigma_i \hat{d}_i = d$.

**11.** The computer-implemented method of claim 10, wherein generating the refreshed plurality of partial private keys $\hat{d}_i$ comprises:

> selecting $n - 1$ values $\theta_i$;
> setting $\hat{d}_i = d_i + \theta\_i$ for $i < n - 1$; and

$$\hat{d}_{n-1} = d_{n-1} - \sum_0^{n-2} \theta_i.$$

**12.** The computer-implemented method of any one of claims 1 to 11, further comprising:

> receiving a message **M**; and
> applying a hashing algorithm to the message **M** to generate the hash **m**.

**13.** A host device configured to execute the computer-implemented method of any one of claims 1 to 12.

**14.** A computer program product comprising instructions which, when the program is executed by a computer, cause the computer to carry out the computer-implemented method of any one of claims 1 to 12.

Tangent to
curve at
point **P**

Fig. 1

S100: Obtain private key $d$.

↓

S102: Calculate $r$.

↓

S104: Calculate $s$.

↓

S106: Transmit $(r,s)$

# Fig. 2

**Fig. 3**

Client device 100

Host device 200

Client device interface module 201

Processor 202

Digital signature generation module 2020

Memory 204

Elliptic curve parameters 2040

Elliptic curve digital signature algorithm 2042

Private key representation 2043

Plurality of private keys 2044

Buffer 2045

Output module 206

10

EP 4 593 327 A1

S200: Receive request
for digital signature.

S202: Generate digital
signature.

S204: Output digital
signature.

Fig. 4

**S300:** Generate plurality of partial private keys $d_i$.

**S302:** Compute partial public keys $D_i$.

**S304:** Computer global public key $D$.

**S305:** Is $D$ equal to zero?

Yes

No

**S306:** Store plurality of partial private keys $d_i$.

Fig. 5A

**S306:** Retrieve plurality of partial private keys $d_i$.

**S308:** Generate $\kappa_i, \gamma_i$

**S310:** Compute $\delta, \delta^{-1}$.

**S312:** Compute $\Gamma_i, \Gamma$.

**S314:** Compute $R, r$.

**S316:** Is $r$ equal to zero?

Yes

C

No

B

**Fig. 5B**

Fig. 5C

Europäisches
Patentamt
European
Patent Office
Office européen
des brevets

**EUROPEAN SEARCH REPORT**

**Application Number**

EP 24 15 3516

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RODRIGO ABARZA ET AL: "Survey for Performance & Security Problems of Passive Side-channel Attacks Countermeasures in ECC", IACR, INTERNATIONAL ASSOCIATION FOR CRYPTOLOGIC RESEARCH , vol. 20190109:004516 4 January 2019 (2019-01-04), pages 1-43, XP061027473, Retrieved from the Internet: URL:http://eprint.iacr.org/2019/010.pdf [retrieved on 2019-01-04] * abstract * * Chapter 1: "Introduction" * * Chapter 2: "Mathematical background" * * Chapter 4: "Countermeasures of Simple Side-channel attacks in ECC" * * Chapter 5: "Countermeasure for Differential Power Analysis in ECC" * * Chapter 6: "Countermeasure Adress-bit DPA" * ----- | 1-14 | INV. H04L9/32 H04L9/00 |
| A | US 2020/213099 A1 (WRIGHT CRAIG STEVEN [GB]) 2 July 2020 (2020-07-02) * abstract * * paragraphs [0001] - [0050] * ----- -/-- | 1-14 | TECHNICAL FIELDS SEARCHED (IPC) H04L |

The present search report has been drawn up for all claims

| Place of search | Date of completion of the search | Examiner |
|---|---|---|
| Munich | 26 June 2024 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt European Patent Office Office européen des brevets | **EUROPEAN SEARCH REPORT** | **Application Number** EP 24 15 3516 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GHINEA DIANA ET AL: "Hybrid Post-quantum Signatures in Hardware Security Keys", 4 October 2023 (2023-10-04), APPLIED CRYPTOGRAPHY AND NETWORK SECURITY WORKSHOPS; [LECTURE NOTES IN COMPUTER SCIENCE; LECT.NOTES COMPUTER], SPRINGER NATURE SWITZERLAND, CHAM, PAGE(S) 480 - 499, XP047671876, ISSN: 0302-9743 ISBN: 978-3-031-41180-9 [retrieved on 2023-10-04] * abstract * * Chapter 1: "Introduction" * ----- | 1-14 | |

| | | | TECHNICAL FIELDS SEARCHED (IPC) |
|---|---|---|---|
| | | | |

The present search report has been drawn up for all claims

| Place of search | Date of completion of the search | Examiner |
|---|---|---|
| Munich | 26 June 2024 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 3516

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2024

| Patent document cited in search report | Publication date | Patent family member(s) | Publication date |
|---|---|---|---|
| US 2020213099 A1 | 02-07-2020 | CN 110999207 A | 10-04-2020 |
| | | EP 3669491 A1 | 24-06-2020 |
| | | EP 4325770 A2 | 21-02-2024 |
| | | JP 7202358 B2 | 11-01-2023 |
| | | JP 2020532168 A | 05-11-2020 |
| | | JP 2023024683 A | 16-02-2023 |
| | | KR 20200035280 A | 02-04-2020 |
| | | KR 20240011260 A | 25-01-2024 |
| | | SG 11202000808W A | 27-02-2020 |
| | | TW 201921888 A | 01-06-2019 |
| | | TW 202403575 A | 16-01-2024 |
| | | US 2020213099 A1 | 02-07-2020 |
| | | US 2023013158 A1 | 19-01-2023 |
| | | WO 2019034986 A1 | 21-02-2019 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- How to Estimate the Success Rate of Higher-Order Side-Channel Attacks. **LOMNÉ, V.** ; **PROUFF, E.** ; **RIVAIN, M.** ; **ROCHE, T.** ; **THILLARD, A.** Cryptographic Hardware and Embedded Systems - CHES 2014. CHES 2014. Lecture Notes in Computer Science. Springer, 2014, vol. 8731

- **PIRET, GILLES** ; **F-X. STANDAERT**. Security analysis of higher-order Boolean masking schemes for block ciphers (with conditions of perfect masking).. *IET Information Security*, 2008, vol. 2 (1), I-II
- **GENNARO, ROSARIO** ; **STEVEN GOLDFEDER**. One round threshold ECDSA with identifiable abort.. *Cryptology*, 2020